# EUROPEAN PATENT APPLICATION

(11) **EP 0 955 785 A1**
(43) Date of publication of application: **10.11.1999**
(21) Application number: 98400843.3
(22) Date of filing: 07.04.1998
(51) Int. Cl.: H04Q 11/04, H04L 12/56, H04L 12/46

(54) **Traffic based shortcut method and router**

(71) Applicant: ALCATEL, 75008 Paris (FR)
(72) Inventor: Dumortier, Philip Vincent, 2300 Turnhout (BE)
(74) Representative: Narmon, Gisèle Marie Thérèse

(57) **Abstract**

The present invention relates to a method and related device to be used to establish a traffic based shortcut when running the Internet Protocol (IP) over a connection oriented network. Such a network may exists of a number of switch-routers and/or one or more IP-routers and/or one or more switches. The shortcutting is performed by the co-operation of the present IP-routers and or IP-router-parts. The described configuration manages the forwarding of Internet Protocol packet flows along a shortcut path. For each shortcut path set-up, a separate virtual channel connection is used. Only a restricted number of virtual channels is available for shortcut paths to be set up. To improve the efficiency of use of the available virtual channels, the time-out period of a shortcut path is determined depending on the local network load. By maintaining and using, an existing shortcut path to forward one or more IP packet flows simultaneously with, or subsequently to the first shortcutted flow the efficiency is increased as well.

## Description

The present invention relates to a traffic based shortcut method method to be used when running the Internet Protocol over a connection oriented network as described in the preamble of claim 1 and a related device as defined in the preamble of claim 4.

Such a traffic based shortcut method and related system are already known in the art, e.g. from the article *"IP-Switching and Gigabit Routers"* from the authors P. Newman, G. Minshall, T. Lyon and L. Huston. This article is published in the IEEE Communications magazine, January 1997, Pages 64 - 70. Therein, the method of shortcutting of IP packet flows over an ATM-network, called IP switching, is described.

This method refers to the ability to forward network layer packets (L3) at the link layer (L2) over network boundaries. In the context of Internet Protocol, hereafter called IP, over ATM, it means that IP-datagrams can be transferred over the underlying ATM network without being processed by an IP-router when crossing network boundaries . This method is called shortcut method because of the ability to shortcut IP-routers (L3) in the forwarding and using instead the underlying connection oriented ATM-network herefore.

The shortcut method is performed by a switch-router, called an IP switch. This switch-router is built up of a switching element and a router which is called an IP switch controller. This configuration switches IP packet flows along a shortcut path called a virtual channel connection. For each shortcut path set-up, a separate virtual channel connection is used. Only a restricted number of virtual channels is available for shortcut paths to be set up.

A traffic based shortcut solution results in usage of a relatively large number of shortcut paths, which means that the available virtual channels are not efficiently used. Consequently the available virtual channels are not always allocated to the flows which need the virtual channel most urgently.

An object of the present invention is to provide a traffic based shortcut method of the above known type and related devices adapted to perform this method, but wherein the available number of virtual channels are used more efficiently to transport more IP packet flows and wherein consequently internet throughput is increased.

According to the invention, this object is achieved by the method described in claim 1 and the related device described in claim 4.

Indeed by using an adaptable time-out period for release of a shortcut path, the internet throughput is even more increased. Because there is only a limited number of virtual channels available, it is most efficient to adapt the time-out period optimum to the current IP packet flow. This means release a virtual channel if no data-packets are forwarded over this channel during this time-out period.

Another characteristic feature of the present invention is the local network load dependency of the adaptable time-out period of a shortcut path as described in claim 2 and the related device as described in claim 5. The local network load may be the relative number of virtual channels in use for shortcuts on a specific link.

Because there is only a limited number of virtual channels available, it is most efficient to dynamically adapt the time-out period in function of the current occupation percentage of the available virtual channels. This means release a virtual channel connection if no data-packets are forwarded over this channel when other flows are waiting for an available channel. For example, if only a few shortcut paths are used, the time-out period can be relatively long because there is no competing shortcut flow which needs an available path. On the other hand when all available virtual channels are in use already and there exist more candidate shortcut flows, the existing shortcut paths should be released faster so that only the most intensive shortcut users remain.

An additional characteristic feature of the present invention is described in claim 3 and the related device as described in claim 6.

Indeed, in this way, by maintaining and using a shortcut path, already set up, for simultaneous and/or subsequent IP packet flows, the procedure of: selecting an IP packet flow, establishing a shortcut path, forwarding this selected IP packet flow and then releasing the shortcut path, needs not to be repeated for each to be shortcutted IP packet flow and proportionally more traffic can be shortcut with the same number of virtual channels. Hence by reducing the number of shortcut path set-ups and additionally reducing the signalling overhead, the throughput, e.g. the internet throughput, increases.

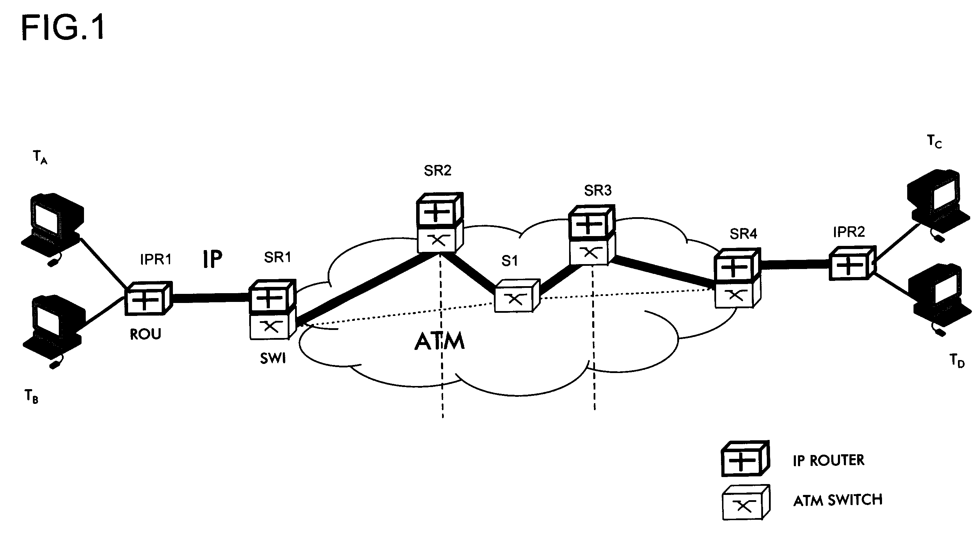

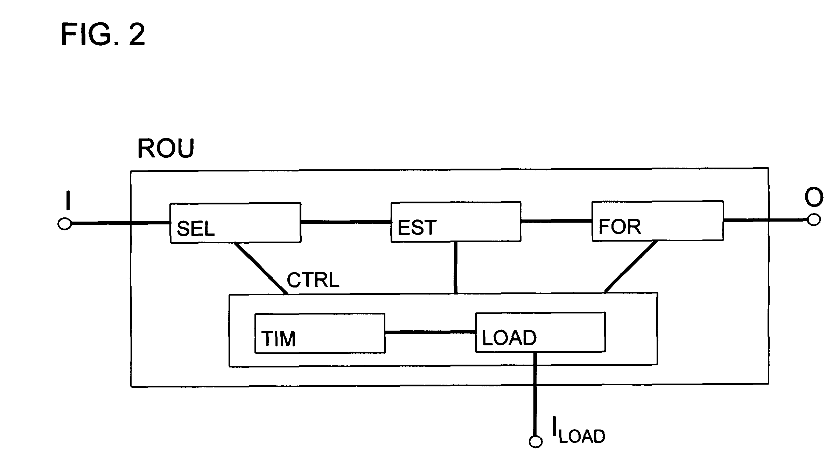

The above and other objects and features of the invention will become more apparent and the invention itself will be best understood by referring to the following description of an embodiment taken in conjunction with the accompanying drawings whereby FIG. 1 represents an IP over ATM communications network including IP-routers, switch-routers and ATM-switches and FIG. 2 represents the functional structure of an IP-router ROU of FIG.1, wherein an implementation of the method according to the present invention is executed. In this embodiment an IP over ATM network is realised, however any other connection oriented network is evenly suitable.

In the first paragraph of this description the elements of the network and the relevant means of the IP-router are described, in the second paragraph, all connections between the before mentioned network elements and described means are defined. In the succeeding paragraph the actual execution of the traffic based shortcut method is described.

The essential elements of the network of the embodiment of the present invention are IP-routers IPR1 and IPR2, switch-routers, SR1, SR2, SR3 and SR4 and ATM-switch S1 as shown in FIG. 1.

A router part ROU of IP-router IPR1, is connected to an IP-router-part of switch-router SR1 by an IP-link. An ATM-switch part SWI of switch-router SR1 is connected to an ATM-switch part of switch-router SR2 and to ATM-switch S1 by a virtual channel . The ATM-switch part of switch-router SR2 is also connected to ATM-switch S1. ATM-switch S1 is connected to an ATM-switch part of switch-routers SR3 and SR4. The ATM-switch part of switch-router SR3 is also connected to an ATM-switch part of switch-router SR4. IP-router IPR2 is connected to an IP-router-part of switch-router SR4 by an IP-link. Then at last there are two terminals, terminal T_{A} and terminal T_{B} connected to IP-router IPR1 and two terminals, terminal T_{C} and terminal T_{D} connected to IP-router IPR2.

The IP-router's, IPR1, IPR2 and router part's of SR1, SR2, SR3 and SR4, task is the route-determination and forwarding of an IP packet flow, that is a stream of IP-datagrams, through the network which is an internet network.

The ATM-switch S1 functions as the switching fabric of the router and maps the before mentioned flows onto an ATM virtual channel connection established across the ATM-switch. The switch-router is a combination of the before described IP-router and ATM-switch.

The IP-router parts of IP-routers IPR1 and IPR2 and switch-routers SR1, SR2, SR3 and SR4 have the same structure as ROU. The switch parts of switch S1 and switch-routers SR1, SR2, SR3 and SR4 have the same structure as SWI.

The before mentioned IP-router ROU as shown in FIG. 2 is built of the following main elements: selecting means SEL, establishing means EST, forwarding means FOR and control means CTRL.

Referencing to the drawing in FIG. 2 wherein the functional structure of the IP-router ROU is presented, the interconnections within the router ROU are described. The selecting means SEL has an input-terminal I which is also an input terminal of the IP-router ROU. The selecting means SEL is coupled to the establishing means EST which is coupled to the forwarding means FOR. The forwarding means FOR has an output-terminal O which is also an output-terminal of the IP-router ROU. A control means CTRL is coupled to each of the before mentioned means: selecting means SEL, establishing means EST and forwarding means FOR. A load measurement means LOAD included in CTRL has a control input-terminal I_{LOAD} which is also a control input terminal of the IP-router ROU.

CTRL also includes a timing means TIM coupled to the load measurement means LOAD.

The selecting means SEL takes care of selecting the IP packet flows for which it is useful to forward along a shortcut path instead of forwarding a flow hop by hop through the network towards its destination. The second means, the establishing means EST is responsible for setting up a shortcut path for the selected IP packet flow.
The task of forwarding means FOR is forwarding the IP packet flow over the shortcut path. CTRL provides the functionality of controlling the connection handling. The responsibility of timing means TIM is providing the functionality needed for timing out a connection. The load measurement means LOAD handles the measurements of percentage of available virtual connections necessary for determining a optimum time-out period.

To describe the working of ROU it is supposed that a number of IP packet flows are fed to the IP-router IPR1. These flows can be routed hop by hop through the IP over ATM network to its destination or forwarded over a shortcut path to be set-up. This choice depends on the type of flow and among other criteria on the quantity of the traffic. In case of a long-lived or high volume flow it is useful to set up a shortcut path, which is the subject of the present invention, and in case of only a few IP-data packets is more convenient to route them hop by hop through the network. The hop by hop forwarding is no subject of the present invention and is for this reason not further discussed.

Then it is supposed that a long-lived or high volume IP packet flow is selected from a number of incoming IP packet flows. The selection of a flow to be shortcut is made based on a set of predetermined criteria. A relevant selection criterion might be the type of application, like FTP- or Telnet or another criterion, for example, might be a traffic density exceeding a certain threshold.
The before mentioned selected IP packet flow originating from Terminal T_{A} is fed to IP-router IPR1 and having Terminal T_{C} as destination. The mentioned IP packet flow is selected by selecting means SEL of ROU of IP-router IPR1 to be shortcut instead of being routed hop by hop to its destination. The shortcut path is set-up, initiated by the establishing means EST of ROU of IP-router IPR1. This set-up takes place in co-operation with the establishing means of switch-routers SR1, SR2, SR3, SR4 together with ATM-switch S1. In this way, one of a restricted number of virtual channels is reserved for forwarding the long-lived or high volume IP packet flow from IP-router IPR1, for example, via switch-routers SR1, SR2, ATM-switch S1 and switch-routers SR3 and SR4 to IP-router IPR2.

Subsequently the flow is forwarded along the mentioned shortcut path. Control means CTRL consists of a load measurement means LOAD which determines the current load on the network, more specific the number of used virtual channels. Information concerning the current local network load is retrieved from a associated switch via control input I_{LOAD}. In this belonging switch a table (not shown) containing a list of all available and used virtual channels is kept up to date. Because there is only a limited number of virtual channels available, it is most efficient to adapt the time-out period of the current shortcut path based on the current occupation percentage of the available virtual channels. The timing means TIM, also part of the control means CTRL, takes care of the timing out of a connection. As mentioned before this time-out period dealt with by the timing means TIM is based on the local network load determined by the load measurement means LOAD. This relation is clarified in the following. For example, if only a few virtual connections to be used as shortcut paths are set-up, the time-out period can be relatively long because there is no competing shortcut flow which needs an available virtual connection. On the other hand when all available virtual channels are in use already and there exist more candidate shortcut flows, the existing shortcut paths should be released faster so that only the most intensive shortcut users remain.

In this way, by adapting the time-out period in function of the local network load, in this case the number of used virtual channels, the number of available virtual channels is used more efficiently which means that the network throughput increases.

The network throughput is also increased by, another subject of the present invention: maintaining and using an existing shortcut path for forwarding simultaneous and subsequent IP packet flows. During or just after the forwarding of the earlier mentioned IP packet flow over the mentioned shortcut path, another IP packet flow originating at terminal T_{B} should be routed to Terminal T_{D} as destination. This flow, at first, is selected by selecting means SEL of IP-router IPR1. Next the forwarding means FOR of IP-router IPR1 will forward this IP packet flow, in contrary to the old situation, over the still existing shortcut path, instead of establishing a completely new shortcut path dedicated to this IP packet flow.

In this way, by maintaining and using a shortcut path, already set up, for simultaneous or subsequent IP packet flows, the procedure of selecting an IP packet flow, establishing a shortcut path, forwarding this selected IP packet flow and then releasing the shortcut path, needs not to be repeated for each to be shortcutted IP packet flow and proportionally more traffic can be shortcut with the same number of virtual channels.

While the principles of the invention have been described above in connection with specific apparatus, it is to be clearly understood that this description is made only by way of example and not as a limitation on the scope of the invention, as defined in the appended claims.

Additionally the following remark has to be made: in spite of the functional level of the description of the invention, a person skilled in the art is expected to be able to derive an implementation from the mentioned description.

## Claims

1. A traffic based shortcut method to be used when running the Internet Protocol over a connection oriented network including a plurality of routers and/or switch-routers and/or switches interconnected by links adapted to carry a connection, said method comprising the steps of:
a. selecting an Internet Protocol packet flow that is suitable to be forwarded along a shortcut path;
b. establishing a shortcut path for said Internet Protocol packet flow; and
c. forwarding said Internet Protocol packet flow over said shortcut path;
d. releasing said shortcut path after a time-out period,
**characterised in that** said time-out period is an adaptable time-out period.

2. The traffic based shortcut method according to claim 1,
**characterised in that** said adaptable time-out period is determined based on the local network load.

3. The traffic based shortcut method according to claim 1,
**characterised in that** said shortcut path is maintained and used for forwarding at least one additional simultaneous or subsequent flow to be transferred over said shortcut path.

4. A traffic based shortcut router device (ROU) enabled to transfer Internet Protocol packet flows over a connection oriented network, said network including a plurality of routers, switch-routers and/or switches interconnected by links, said router device comprising:
a. selecting means (SEL), adapted to select an Internet Protocol packet flow that is suitable to be forwarded along a shortcut path;
b. establishing means (EST), adapted to establish said shortcut path for said selected Internet Protocol packet flow ; and
c. forwarding means (FOR), adapted to forward said IP packet flow over said shortcut path;
d. control means (CTRL), including a timer (TIM), adapted to release said shortcut path after the time-out period,
**characterised in that** said timer (TIM) is adapted to vary said time-out period.

5. The traffic based shortcut router device (ROU) according to claim 4,
**characterised in that** said control means (CTRL) further comprises load measurement means (LOAD), adapted to determine a present local network load in order to determine said adaptable time-out period in function of said local network load.

6. The traffic based shortcut router device according to claim 4,
**characterised in that** said forwarding means (FOR) further is adapted to forward at least one additional simultaneous or subsequent Internet Protocol packet flow over said shortcut path.
